# EUROPEAN PATENT SPECIFICATION

(11) **EP 2 433 986 B1**
(45) Date of publication and mention of the grant of the patent: **23.08.2017**
(21) Application number: 10777959.7
(22) Date of filing: 20.05.2010
(51) Int. Cl.: C08L 69/00, C08G 64/02, A41D 19/00, C08K 5/053, C08K 5/29, C08G 64/34, C09D 169/00

(54) **RESIN COMPOSITION FOR A DISPOSABLE RESIN MOLDED PRODUCT, AND DISPOSABLE RESIN MOLDED PRODUCT**
HARZZUSAMMENSETZUNG FÜR EIN EINWEG-HARZFORMPRODUKT SOWIE EINWEG-HARZFORMPRODUKT
COMPOSITION DE RÉSINE POUR PRODUIT MOULÉ À JETER, ET PRODUIT MOULÉ À JETER FAIT DE LA RÉSINE

(30) Priority: 22.05.2009 KR 20090044872
(43) Date of publication of application: 28.03.2012
(73) Proprietor: LG Chem, Ltd., Youngdungpo-gu Seoul 150-721 (KR)
(72) Inventor: YOON, Sung-Cheol, Daejeon 305-509 (KR); CHOI, Ho-Yeul, Daejeon 305-761 (KR); PARK, Seung-Young, Daejeon 305-761 (KR); KIM, Byoung-Yun, Daejeon 302-739 (KR); KIM, Jung-Eun, Daejeon 302-120 (KR); LEE, In-Su, Daejeon 305-380 (KR)
(74) Representative: Goddar, Heinz J.
(86) International application number: PCT/KR2010/003203
(87) International publication number: WO 2010/134772

(56) References cited:
- EP-A1- 1 264 860
- EP-A2- 0 618 248
- WO-A1-96/06877
- WO-A1-03/029325
- WO-A1-2010/034689
- JP-A- 11 335 913
- JP-A- 2002 114 899
- JP-A- 2007 106 994
- KR-B1- 100 186 814
- KR-B1- 100 895 952
- DATABASE WPI Week 200901 Thomson Scientific, London, GB; AN 2009-A16362 XP002727287, -& JP 2008 024849 A (MITSUI CHEM INC) 7 February 2008 (2008-02-07)
- DATABASE WPI Week 200676 Thomson Scientific, London, GB; AN 2006-735199 XP002727288, -& JP 2006 265395 A (TORAY IND INC) 5 October 2006 (2006-10-05)

## Description

### BACKGROUND OF THE INVENTION

### (a) Field of the Invention

The present invention relates to a use of a resin composition for preparing a disposable resin molded product more particularly, to the use of a resin composition for preparing a disposable resin molded product that enables preparation of a disposable resin molded product not only maintaining excellent mechanical properties but also exhibiting biodegradability entailing an environment-friendly feature.

### (b) Description of the Related Art

There have recently been widely used disposable resin molded products that comprise disposable films for wrappers; disposable gloves; disposable containers such as disposable cups or plates; or disposable rubber molded products used for building materials or automotive interior materials and combustible for waste incineration.

For example, disposable gloves that are hard-to-recycle single-use work gloves have been consumed mainly for industrial uses in the fields of medicine, chemistry or chemical engineering, and in recent years spread in wider range of applications related to sanitation or human health, including foods or cosmetics.

The disposable resin molded products such as disposable gloves can be prepared from various resin materials that are thin and elastic with rubber-like properties, such as, for example, synthetic polyisoprene, polychloroprene, polyurethane, polyvinyl chloride, polystyrene-butadiene-styrene, styreneisoprene-styrene, silicon, polybutadiene methyl methacrylate, polyacrylonitrile, or polystyrene-ethylene-butylstyrene).

The disposable resin molded products prepared from those resin materials are hard to decompose in an environment-friendly way and emitting toxic gases due to incomplete combustion when landfilled or incinerated, seriously causing environmental pollution.

For that reason, many efforts have been made to prepare the disposal resin molded product from various biodegradable resin materials. Unfortunately, there has never been developed yet such a disposable resin molded product that is not only biodegradable but also satisfactory in acquiring rubber-like mechanical properties including elasticity, elongation, or strength necessary to the disposable resin molded products such as disposable gloves.

WO03/029325 A1 discloses a high-molecular aliphatic polycarbonate having an average molecular weight ranging from 30,000 to 1,000,000, and wherein the content of cyclic carbonates and polyether equals in total a maximum of 5 wt.-%..

EP1264860 A1 discloses a resion composition comprising 30 to 95 parts by weight of a biodegradable polylactic acid resin (A) and 70 to 5 parts by weight of a specified polyalkylene carbonate (B), providing that the sum of components (A) and (B) is 100 parts by weight.

EP0618248 A2 discloses a polymer containing carboxylic acid ester and carbonic acid ester groups.

WO96/06877 A1 discloses intermediate layers consisting of polymers obtained by the copolymerization of alkylene oxides with carbon dioxide or the copolymerization of alkylene oxides with carbon dioxide and lactones in the presence of catalysts.

WO2010/034689 A1 relates to a biodegradable polymer mixture comprising at least one polyester based on aliphatic or aliphatic-aromatic dicarboxylic acids and aliphatic dihydroxy compounds, polyalkylene carbonate and biodegradable homo- or copolyesters.

JP2008024849 A discloses a biodegradable block copolymer prepared by reaction of a hydroxyl terminated polyester, and oligomeric polyalkylene carbonate and an isocyanate. Molded products are made thereof.

### SUMMARY OF THE INVENTION

Accordingly, the present invention provides a use of a resin composition that enables preparation of a disposable resin molded product not only maintaining excellent mechanical properties but also having biodegradability entailing an environment-friendly feature.

### DETAILED DESCRIPTION OF THE EMBODIMENTS

The present invention provides a use of a resin composition for preparing a disposable resin molded product, comprising a polyalkylene carbonate resin, and a cross-linking agent including an isocyanate compound and an alcohol compound having at least two hydroxyl groups,
wherein the disposable resin molded product has an elongation of at least 150 % and a strength of at least 5 MPa, and is a disposable glove, and
wherein the alcohol compound having at least two hydroxyl groups comprises at least one selected from the group consisting of ethylene glycol, 1,4-butanediol, 1,6-hexanediol, 1,2,6-trihydroxyhexane, 1,3,5-cyclohexanetriol, pentaerythritol, or 1,4-dihydroxydiethyl benzene,
wherein the elongation and the strength are measured at a strain rate of 500mm/min according to ASTM D 412.

Further embodiments are disclosed in the sub-claims.

Hereinafter, a description will be given about a resin composition for disposable resin molded product, a disposable resin molded product, and a preparation method thereof.

Unless otherwise specified, several terms as used through this specification are defined as follows:
The term "comprise" or "contain" as used herein means to comprise a certain constituent (or component) without limitation, and may not be interpreted as that addition of another constituent (or component) is excluded.

The term "Polyalkylene carbonate resin" as used herein refers to a kind of polycarbonate polymers prepared from an epoxide compound, such as, for example, an alkylene oxide compound and carbon dioxide used as monomers through copolymerization, and can be defined as a homopolymer or copolymer including a repeating unit of the following formula 1: 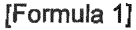 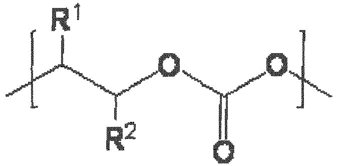 where R¹ and R² are independently hydrogen, alkyl, aryl, alkenyl, or cycloalkyl. R¹ and R² can be bonded to each other to form a cycloalkyl group.

The "polyalkylene carbonate resin" can be obtained using an epoxide-based monomer, such as, for example, ethylene oxide, propylene oxide, 1-butene oxide, 2-butene oxide, isobutyrene oxide, 1-pentene oxide, 2-pentene oxide, 1-hexene oxide, 1-octene oxide, cyclopentene oxide, cyclohexene oxide, styrene oxide, or butadiene monoxide, or using at least two of the different epoxide-based monomers. To maintain the characteristic properties pertaining to the repeating unit, the "polyalkylene carbonate resin" may be a homopolymer consisting of the repeating unit, or a copolymer including the repeating unit. For example, the "polyalkylene carbonate resin" may be a copolymer of at least two repeating units belonging to the category of formula 1, or a copolymer including the repeating unit and an alkylene-oxide-resin-based repeating unit. In order to maintain the characteristic properties pertaining to the repeating unit of formula 1, such as biodegradability or low glass transition temperature, the "polyalkylene carbonate resin" can be a copolymer including at least one repeating unit of formula 1 in an amount of at least about 40 mole %, preferably at least about 60 mole %, more preferably at least about 80 mole %.

The category of the polymer that can be referred to as "polyalkylene carbonate resin" encompasses all the polymers in any state after completion of the polymerization reaction for forming a polymer including the repeating unit of formula 1 such as, for example: unpurified or purified polymers after completion of the polymerization for forming a homopolymer or a copolymer including the repeating unit; polymers included in a liquid or solid resin composition prior to product molding; or polymers contained in a resin layer or a disposable resin molded product after completion of hardening (or cross-linking mediated by another compound) and product molding.

The term "Resin composition" as used herein refers to a resin composition containing the polyalkylene carbonate resin or prepared from the polyalkylene carbonate resin. Expensively, the "resin composition" comprises not only a liquid composition before hardening but also a solid composition or any other composition in any state contained in the resin layer or the disposable resin molded product after hardening (cross-linking) or product molding.

The term "Disposable resin molded product" as used herein refers to any resin molded product that is not designed for permanent or semi-permanent use but disposed or washed/recycled through a defined process after single use or several times of use, such as, for example, less than 10 times, preferably less than 5 times. The "disposable resin molded product" is a resin molded product required to have rubber-like properties such as an elongation of at least about 150 % and a strength of at least about 5 MPa, as measured under the conditions of Example 5, preferably an elongation of at least about 400 % and a strength of at least about 10 MPa. The "disposable resin molded product" comprises a resin layer satisfying the elongation and strength requirements, or consists of the resin layer alone. The usage of the "disposable resin molded product" is not specifically limited and may encompass a wide range of applications in the fields of medicine, chemistry, chemical engineering, or cosmetics.

On the other hand, the inventors of the present invention have found out that because the polyalkylene carbonate resin among the various biodegradable resins contributes to realization of biodegradability as well as excellent properties such as rubber-like elasticity or strength necessary to the disposable resin molded products, the use of the polyalkylene carbonate resin provides a solution to the problems with the conventional disposable resin molded products and enables preparation of a disposable resin molded product exhibiting both excellent properties and biodegradability.

There is provided a resin composition for preparing a disposable resin molded product that comprises a polyalkylene carbonate resin.

The resin composition comprises a polyalkylene carbonate resin as a principal component. The polyalkylene carbonate resin is an amorphous transparent resin. Unlike aromatic polycarbonate resins that are engineering plastics of a similar series, the polyalkylene carbonate resin is advantageously biodegradable and thermally decomposable at a low temperature, completely into carbon dioxide and water with no carbon residue left behind.

Likewise, the polyalkylene carbonate resin has a relatively low glass transition temperature T_{g} below about 40 °C, for example, about 10 to 40 °C, as adjustable within the range, so the resin layer or the disposable resin molded product prepared from the polyalkylene carbonate resin can have rubber-like elasticity (see Inoue et al., Polymer J., 1982, 14, 327-330).

Furthermore, according to the inventor's experiment results, the resin layer obtained from the polyalkylene carbonate resin shows excellent mechanical properties including elongation or strength that are suitable for the use purpose of the disposable resin molded product.

Accordingly, using the polyalkylene carbonate resin and the resin composition including the polyalkylene carbonate resin enables preparation of disposable resin molded products that not only maintains excellent properties necessary to the disposable resin molded products but also shows biodegradability and complete combustion decomposability entailing an environment-friendly feature.

In the resin composition, the polyalkylene carbonate resin may comprise a repeating unit of formula 1: 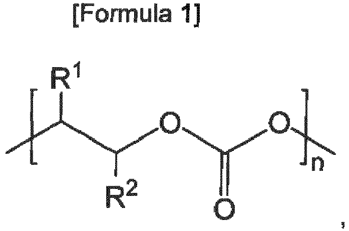 where n is an integer from 10 to 1000; and R¹ and R² are independently hydrogen, an alkyl group having 1 to 20 carbon atoms, an aryl group having 6 to 20 carbon atoms, an alkenyl group having 1 to 20 carbon atoms, or a cycloalkyl group having 3 to 20 carbon atoms. R¹ and R² may be bonded to each other to form a cycloalkyl group having 3 to 10 carbon atoms.

The polyalkylene carbonate resin may be a homopolymer consisting of the repeating unit, or a copolymer including the repeating units. More specifically, the polyalkylene carbonate resin may be a copolymer of at least two of the repeating unit belonging to the category of formula 1, or a copolymer including at least one of the repeating unit and a repeating unit of an alkylene oxide resin. To maintain the characteristic properties pertaining to the repeating unit of formula 1, such as biodegradability or low glass transition temperature, the polyalkylene carbonate resin can be a copolymer including at least one repeating unit of formula 1 in an amount of at least about 40 mole %, preferably at least about 60 mole %, more preferably at least about 80 mole %.

The repeating unit of formula 1 comprises different functional groups as substituents, such as hydrogen, an alkyl group having 1 to 20 carbon atoms, an aryl group having 6 to 20 carbon atoms, an alkenyl group having 1 to 20 carbon atoms, or a cycloalkyl group having 3 to 20 carbon atoms. Among these functional groups, a proper one is selected as a substituent in consideration of the mechanical properties or biodegradability of a desired polyalkylene carbonate resin. The polyalkylene carbonate resin including the repeating unit of formula 1 is superior in biodegradability when the substituent is a hydrogen atom or a functional group containing a relatively small number of carbon atoms (e.g., an alkyl or cycloalkyl group having a small number of carbon atoms) as a substituent; or superior in mechanical properties such as strength when the substituent is a functional group containing a relatively large number of carbon atoms. For example, the polyethylene carbonate resin is biodegraded more rapidly than the polypropylene carbonate resin (see Inoue et al., Chem. Pharm. Bull, Jpn, 1983, 31, 1400; Ree et al., Catalysis Today, 2006, 115, 288-294).

In the polyalkylene carbonate resin, the degree of polymerization (n) of the repeating unit of formula 1 may be 10 to 1000, preferably 50 to 500. The polyalkylene carbonate resin containing the repeating unit of formula 1 may have a weight average molecular weight of about 10,000 to 1,000,000, preferably about 50,000 to 500,000. As the repeating unit and the polyalkylene carbonate resin have a degree of polymerization and a weight average molecular weight in such ranges, the resin layer or the disposable resin molded product prepared from the repeating unit and the polyalkylene carbonate resin can have biodegradability as well appropriate mechanical properties such as strength.

The resin composition for disposable resin molded product may comprise a polyalkylene carbonate resin alone; or another resin such as a polylactide resin or a biodegradable polyester resin (e.g., polybutylene succinate) as well as the polyalkylene carbonate resin. To exhibit biodegradability and characteristic properties such as low glass transition temperature pertaining to the polyalkylene carbonate resin, the resin composition can comprise the polyalkylene carbonate resin in an amount of at least about 40 wt.%, preferably at least about 60 wt.%, more preferably at least about 80 wt.% with respect to the total content of the resin.

The resin composition further comprises a defined cross-linking agent as well as the polyalkylene carbonate resin. The cross-linking agent comprises an isocyanate compound. In the resin composition, the cross-linking agent also comprises an alcohol compound (also, called "polyhydric alcohol compound") having at least two hydroxyl groups as well as the isocyanate compound. The polyalkylene carbonate resin containing terminal hydroxyl groups reacts with the isocyanate compound to form urethane bonds. The polyhydric alcohol compound also reacts with the isocyanate compound to form urethane bonds, which are chain-linked together to function as a chain extender mediating the linking between the polyalkylene carbonate resin and the isocyanate compound.

Accordingly, when the resin composition contains the isocyanate compound, a cross-linking structure with a number of urethane bonds (amide bonds) is formed in the process of hardening the resin composition and molding a product. Likewise, when the resin composition contains both the isocyanate compound and the polyhydric alcohol compound, the isocyanate compound reacts with the terminal hydroxyl groups of the polyalkylene carbonate resin and the hydroxyl groups of the polyhydric alcohol compound to form a number of urethane bonds, and the polyhydric alcohol compound chain-links the urethane bonds together and functions as a chain extender mediating the linking between the polyalkylene carbonate resin and the isocyanate compound, thereby effectively forming a cross-linking structure having a number of urethane bonds.

From the resin composition, there can be prepared a resin layer and a disposable resin molded product that comprise cured-product between the isocyanate compound and the polyalkylene carbonate resin as optionally mediated by the polyhydric alcohol compound. The resin layer and the disposable resin molded product have enhanced mechanical properties such as tensile strength pertaining to the cross-linking structure, so the resin composition that additionally comprises the cross-linking agent can be used to provide a disposable resin molded product showing more enhanced mechanical properties as well as biodegradability.

In the resin composition, either the isocyanate compound or the polyhydric alcohol compound having at least two hydroxyl groups is contained in an amount of about 0.01 to 10 parts by weight with respect to 100 parts by weight of the polyalkylene carbonate resin. The cross-linking agent including the isocyanate compound or the cross-linking agent including both the isocyanate compound and the polyhydric alcohol compound is preferably contained in an amount of about 0.01 to 10 parts by weight, more preferably about 0.1 to 7 parts by weight, most preferably about 1 to 5 parts by weight, with respect to 100 parts by weight of the polyalkylene carbonate resin.

Using the isocyanate compound in an excessively low amount, the cross-linking structure containing urethane bonds is not sufficiently formed, and the disposable resin molded product obtained from the resin composition is not good enough in mechanical properties such as strength. Contrarily, with an excess of the isocyanate compound, the resin composition is subjected to hardening or gelation, so the resin layer or the disposable resin molded product with excellent properties is hard to obtain from the resin composition.

Likewise, an excessively low content of the polyhydric alcohol compound leads the disposable resin molded product to failure in acquiring sufficiently good mechanical properties pertaining to the optional addition of the polyhydric alcohol compound; and an excess of the polyhydric alcohol compound prevents the disposable resin molded product from having appropriate biodegradability.

The isocyanate compound may be any type of isocyanate compound either aliphatic or aromatic without limitation, including, for example, ethylene diisocyanate, 1,4-tetramethylene diisocyanate, 1,6-hexamethylene diisocyanate, 1,12-dodecane diisocyanate, cyclobutane 1,3-diisocyanate, cyclohexane 1,3-diisocyanate, cyclohexane 1,4-diisocyanate, m-xylene diisocyanate, p-xylene diisocyanate, 2,4-hexahydrotolylene diisocyanate, 2,6-hexahydrotolylene diisocyanate, perhydro-2,5'-diphenyl methane diisocyanate, perhydro-4,4'-diphenyl methane diisocyanate, 1,3-phenylene diisocyanate, 1,4-phenylene diisocyanate, 2,4-tolylene diisocyanate, 2,6-tolylene diisocyanate, or triphenyl methane-4,4',4"-trisisocyanate.

The polyhydric alcohol compound having at least two hydroxyl groups as used in the resin composition may be any type of polyhydric alcohol compound including ethylene glycol, 1,4-butanediol, 1,6-hexanediol, ,1,2,6-trihydroxyhexane ,1,3,5-cyclohexanetriolor 1,4-dihydroxydiethyl benzene.

In the resin composition, the polyalkylene carbonate resin can be prepared by a method that comprises copolymerizing a defined epoxide-based monomer and carbon dioxide at elevated pressure in the presence of a metallic catalyst to form a repeating unit of formula 1.

The epoxide-based monomer comprises at least one selected from the group consisting of epoxide, alkylene oxide, aryl oxide, alkenyl oxide, cycloalkylene oxide, aryl oxirene, or alkenyl oxirene. The specific type of the monomer can be obviously selected in consideration of the types of the substituents R₁ and R₂ in the repeating unit of formula 1 More specifically, the epoxide-based monomer comprises ethylene oxide, propylene oxide, butylene oxide, cyclohexylene oxide, or a mixture of at least two of these epoxide-based monomers.

The polyalkylene carbonate resin obtained from the epoxide-base monomer has biodegradability as well as rubber-like elasticity and mechanical properties such as strength and elongation preferably applicable to disposable resin molded products.

Moreover, a proper monomer selected among the above-listed various epoxy-based monomers can be used to obtain a polyalkylene carbonate resin and to prepare a resin composition and a disposable resin molded product from the polyalkylene carbonate resin. Hence the disposable resin molded product can be appropriately controlled in thermal property such as glass transition temperature, mechanical properties or biodegradability to have general properties appropriate to a particular use purpose. For example, the polyalkylene carbonate resin obtained form an epoxy-based monomer having a relatively small number of carbon atoms is superior in biodegradability; and the resin obtained from a monomer having a relatively large number of carbon atoms is more advantageous in mechanical properties.

Many studies have been made on the metallic catalysts applicable to the preparation of the polyalkylene carbonate resin (see Inoue et al., U.S. Patent No. 3,953,383; Inoue et al., Poly lett., 1969, 7, 287; Coates et al., Angew, chem. Int. Ed. 2004, 43, 6618-6639). Those studies on the metallic catalysts comprise, for example; a method of preparing a polyalkylene carbonate resin that comprises copolymerizing carbon dioxide and an epoxy-based monomer in the presence of a catalyst obtained from diethyl-Zn and water or dicarboxylic acid; a method of using various heterogeneous catalysts such as Zn-glutarate catalyst obtained from zinc oxide and dicarboxylic acid (see U.S. Patent No. 5,026,676); various heterogeneous catalysts obtained from an active-hydrogen-containing compound such as water, hydroxyphenol, aromatic or aliphatic carboxylic acid, or amine with an organic zinc compound; or the use of homogeneous catalysts that contain free ligands with a relatively high steric hindrance binding to metals (e.g., zinc, cobalt, or chrome) and thereby become soluble in an organic solvent (see Coates et al., Angew, Chem, Int Ed. 2004, 43, 6E18-6639).

The polyalkylene carbonate resin included in the resin composition is prepared in the presence of any metallic catalyst among these known homogeneous or heterogeneous catalysts. The metallic catalyst comprises zinc, cobalt, chrome, or any other catalysts that accelerate copolymerization of the epoxide-based monomer and carbon dioxide.

On the other hand, the resin composition for disposable resin molded product further comprises common additives or media including plasticizer, hardening agent, or solvent, as well as the polyalkylene carbonate resin and the cross-linking agent. The type and content of these additives or solvent conform to a common resin composition for disposable resin molded product.

By containing the polyalkylene carbonate resin, the resin composition for disposable resin molded product enables preparation of a disposable resin molded product that not only shows excellent mechanical properties appropriate to the disposable resin molded product and rubber-like elasticity but also has biodegradability entailing an environment-friendly feature. The disposable resin molded product provides a solution to the problem with the conventional disposable resin molded products in regard to environmental pollution.

There is provided a novel use (using method) of a polyalkylene carbonate resin. The using method comprises: preparing a resin composition including the polyalkylene carbonate resin; and forming a resin layer of a disposable resin molded product from the resin composition. The using method comprises: preparing a resin composition including the polyalkylene carbonate resin and a cross-linking agent containing an isocyanate compound; and forming a resin layer of a disposable resin molded product from the resin composition.

As described above, there can be provided a disposable resin molded product that has both excellent mechanical properties and biodegradability, by using the polyalkylene carbonate resin, the resin composition including the polyalkylene carbonate resin, or the resin composition including the polyalkylene carbonate resin and a defined cross-linking agent in the novel method of using the polyalkylene carbonate resin for preparing a disposable resin molded product.

There is provided a disposable resin molded product prepared from the resin composition. The disposable resin molded product preferably comprises a resin layer containing the polyalkylene carbonate resin.

The disposable resin molded product not only has excellent mechanical properties such as tensile strength or elongation with rubber-like elasticity as realized by the contained resin layer, but also exhibits biodegradability and complete decomposition feature pertaining to the polyalkylene carbonate resin, thereby preventing environmental pollution and realizing environment-friendly uses.

The disposable resin molded product is preferably a resin layer that comprises a cured-product of a polycarbonate resin and a cross-linking agent. Here, the cross-linking agent comprises both an isocyanate compound and a polyhydric alcohol compound.

In the disposable resin molded product, the cured-product comprises a cross-linking structure having a number of urethane bonds between the terminal hydroxyl groups of the polyalkylene carbonate resin and the isocyanate compound of the cross-linking agent. When the cross-linking agent comprises both the isocyanate compound and the polyhydric alcohol compound, the cured-product can comprise a cross-linking structure in which the terminal hydroxyl groups of the polyalkylene carbonate resin or the hydroxyl groups of the alcohol compound react with the isocyanate compound to form a number of urethane bonds, and the alcohol compound chain-links the urethane bonds together to mediate the linking between the polyalkylene carbonate resin and the isocyanate compound.

The cross-linking structure enables the resin layer included in the disposable resin molded product to have much enhanced mechanical properties such as tensile strength. Thus the disposable resin molded product can be preferably used in the case that more excellent mechanical properties are required as well as biodegradability.

The disposable resin molded product may be prepared from the resin composition that comprises the polyalkylene carbonate resin by a common preparation method for disposable resin molded products. For example, the resin layer or the disposable resin molded product is prepared by adding an emulsion of a resin composition including the polyalkylene carbonate resin and additives such as plasticizer or hardening agent into a mould in the shape of the molded product; and drying and hardening (or cross-linking) the resin composition and ejecting the molded product out of the mould.

As described previously the resin composition comprises a defined cross-linking agent, both the isocyanate compound and an alcohol compound having at least two hydroxyl groups. In this case, the hardening (or cross-linking) process forms a defined cross-linking structure during the preparation of the resin layer or the disposable resin molded product, so the resultant disposable resin molded product has more enhanced mechanical properties.

As described above, provided are a disposable resin molded product and its preparation method, where the disposable resin molded product not only satisfies appropriate mechanical properties such as elongation or strength, and rubber-like elasticity necessary to disposable resin molded products but also has biodegradability and complete-combustion decomposability entailing an environment-friendly feature.

The present invention advantageously provides a solution to the problem with the conventional disposable resin molded products emitting toxic gases due to incomplete combustion and causing environmental pollutions when incinerated or landfilled; and also contributes to reuse of carbon dioxide by using carbon dioxide as a monomer in the preparation of the polyalkylene carbonate resin.

### EXAMPLES (all examples are not according to the invention)

In the following are set forth specific examples describing the function and effect in further detail.

### [Experiment Method]

In the following examples and comparative examples, all the experiments dealing with air- or water-sensitive compounds were carried out using standard Schlenk or dry box techniques.

NMR (Nuclear Magnetic Resonance) spectra were obtained with a Bruker 600 spectrometer, and ¹H NMR was measured at 600 MHz.

The molecular weight and the molecular weight distribution of polymers were measured by GPC (Gel Permeation chromatography) using a polystyrene sample as a standard.

### [Preparation Example 1]: Preparation of Polypropylene Carbonate Resin

Zn-glutarate catalyst was used in polymerizing propylene oxide and carbon dioxide to prepare a polypropylene carbonate resin according to the following method (see Polymer Journal 1981, 13, 407; and U.S. Patent No. 5,026,676).

Dry Zn-glutarate catalyst (1 g) and purified propylene oxide (30 g) were put into an autoclave reactor equipped with an agitator, and the reactor was purged with carbon dioxide (CO2) under about 10 atm and then stirred for 10 minutes. The reactor was purged again with carbon dioxide (CO2) under about 50 atm and then allowed to warm up to 60°C for about 24 hours of reaction. After completion of the reaction, unreacted propylene oxide was removed under reduced pressure and dissolved in dichloromethane solvent. The solution was washed with an aqueous HCl solution (0.1 M) and precipitated with a methanol solvent to yield a polypropylene carbonate resin. The collected resin was about 25 g and identified by an NMR spectrum. The weight average molecular weight of the resin as measured by GPC was 250,000.

### [Preparation Example 2]: Preparation of Polyethylene Carbonate Resin

Diethyl-Zn catalyst was used in polymerizing ethylene oxide and carbon dioxide to prepare an ethylene carbonate resin according to the following method (see Journal of Polymer Science B, 1969, 7, 287; and Journal of Controlled Release, 1997, 49, 263).

Dry diethyl-Zn catalyst (1 g) and dioxane solvent (10 mL) were put into an autoclave reactor equipped with an agitator. To this was added dioxane solvent (5 mL) diluted with purified water (0.1 g) while the reactor were being stirred slowly. The reactor was purged with carbon dioxide (CO2) under about 10 atm and then stirred at 120°C for 1 hour. Purified ethylene oxide (10 g) was added. The reactor was purged again with carbon dioxide (CO2) under about 50 atm and then allowed to warm up to 60°C for about 48 hours of reaction. After completion of the reaction, unreacted ethylene oxide was removed under reduced pressure and dissolved in dichloromethane solvent. The solution was washed with an aqueous HCl solution (0.1 M) and precipitated with a methanol solvent to yield a polyethylene carbonate resin. The collected resin was about 15 g and identified by an NMR spectrum. The weight average molecular weight of the resin as measured by GPC was 230,000.

### [Example 1]: Measurement of Properties of Resin Layer Including Polypropylene Carbonate Resin

The polypropylene carbonate resin prepared in Preparation Example 1 was dissolved in dichloromethane solvent. The solution was deposited on a polyethylene terephthalate (PET) release film in a thickness of 70 µm. The coating layer thus obtained was dried at the room temperature and 60 °C to form a resin layer. Three or four dumbbell-shaped test specimens were made according to ASTM D 412. Using a Zwick/Z010 model (supplied by Zwick/Roell Inc.), the specimens were measured up at a strain rate of 500 mm/min in regard to tensile strength (MPa), elongation (%), elastic modulus (E-Modulus) and modulus (Modulus) at strain of 300 % for the resin layer.

### [Example 2]: Measurement of Properties of Resin Layer Including cured-product of Polypropylene Carbonate Resin and Isocyanate Compound (Isocyanate Compound: 1 Part by Weight with respect to 100 Parts by Weight of Resin)

The polypropylene carbonate resin prepared in Preparation Example 1 was dissolved in dichloromethane solvent. To the solution was added hexamethylene diisocyanate (1 part by weight with respect to 100 parts by weight of the resin). The solution was deposited on a PET release film in a thickness of 70 µm. The coating layer thus obtained was dried at the room temperature and 60 °C to form a resin layer. Three or four dumbbell-shaped test specimens were made according to ASTM D 412. Using a Zwick/Z010 model (supplied by Zwick/Roell Inc.), the specimens were measured up at a strain rate of 500 mm/min in regard to tensile strength (MPa), elongation (%), elastic modulus (E-Modulus) and modulus (Modulus) at strain of 300 % for the resin layer.

### [Example 3]: Measurement of Properties of Resin Layer Including cured-product of Polypropylene Carbonate Resin and Isocyanate Compound (Isocyanate Compound: 4 Parts by Weight with respect to 100 Parts by Weight of Resin)

The polypropylene carbonate resin prepared in Preparation Example 1 was dissolved in dichloromethane solvent. To the solution was added hexamethylene diisocyanate (4 parts by weight with respect to 100 parts by weight of the resin). The solution was deposited on a PET release film in a thickness of 70 µm. The coating layer thus obtained was dried at the room temperature and 60 °C to form a resin layer. Three or four dumbbell-shaped test specimens were made according to ASTM D 412. Using a Zwick/Z010 model (supplied by Zwick/Roell Inc.), the specimens were measured up at a strain rate of 500 mm/min in regard to tensile strength (MPa), elongation (%), elastic modulus (E-Modulus) and modulus (Modulus) at strain of 300 % for the resin layer.

### [Example 4]: Measurement of Properties of Resin Layer Including cured-product of Polypropylene Carbonate Resin, Isocyanate Compound and Polyhydric Alcohol Compound

The polypropylene carbonate resin prepared in Preparation Example 1 was dissolved in dichloromethane solvent. To the solution were added hexamethylene diisocyanate (1 part by weight with respect to 100 parts by weight of the resin) and 1,4-butanediol (0.1 part by weight with respect to 100 parts by weight of the resin). The solution was deposited on a PET release film in a thickness of 70 µm. The coating layer thus obtained was dried at the room temperature and 60 °C to form a resin layer. Three or four dumbbell-shaped test specimens were made according to ASTM D 412. Using a Zwick/Z010 model (supplied by Zwick/Roell Inc.), the specimens were measured up at a strain rate of 500 mm/min in regard to tensile strength (MPa), elongation (%), elastic modulus (E-Modulus) and modulus (Modulus) at strain of 300 % for the resin layer.

### [Example 5]: Measurement of Properties of Resin Layer Including cured-product of Polyethylene Carbonate Resin and Isocyanate Compound (Isocyanate Compound: 4 Parts by Weight with respect to 100 Parts by Weight of Resin)

The polyethylene carbonate resin prepared in Preparation Example 2 was dissolved in dichloromethane solvent. To the solution was added hexamethylene diisocyanate (4 parts by weight with respect to 100 parts by weight of the resin). The solution was deposited on a PET release film in a thickness of 70 µm. The coating layer thus obtained was dried at the room temperature and 60 °C to form a resin layer. Three or four dumbbell-shaped test specimens were made according to ASTM D 412. Using a Zwick/Z010 model (supplied by Zwick/Roell Inc.), the specimens were measured up at a strain rate of 500 mm/min in regard to tensile strength (MPa), elongation (%), elastic modulus (E-Modulus) and modulus (Modulus) at strain of 300 % for the resin layer.

The measurement results of Examples 1 to 5 are presented in Table 1. For comparison, a resin layer was prepared in the same thickness of the resin layer of the above examples from a polyvinyl chloride (PVC) or nitrile resin that is commonly used to prepare a conventional disposable resin molded product.

The properties of the resin layer were measured in the same manner as described in the above examples. The measurement results are also presented in Table 1.

**[Table 1]**

| Example | E-Modulus (MPa) | Tensile Strength (MPa) | Elongation (%) | Modulus (MPa) at Strain 300% |
|---|---|---|---|---|
| 1 | 20.7 | 10.1 | 920 | 5.9 |
| 2 | 101.6 | 19.8 | 401.6 | 12.1 |
| 3 | 100.0 | 23.2 | 312.8 | 11.3 |
| 4 | 108.7 | 22.0 | 457.4 | 10.9 |
| 5 | 80.0 | 13.2 | 512.8 | 10.3 |
| PVC | 60 | 9 | 300 | 3 |
| Nitrile | 90 | 4 | 500 | 5 |

Referring to Table 1, the resin layers of Examples 1 to 5 not only have rubber-like elasticity but also exhibit similar or more excellent mechanical properties such as tensile strength and elongation, compared to the PVC or nitrile resin layer applied to the conventional disposable resin molded products.

The resin layers of Examples 1 to 5 predictably show environment-friendly features such as biodegradability and complete decomposability pertaining to the polyalkylene carbonate resin.

Accordingly, the use of the resin layer enables preparation of disposable resin molded products that not only satisfy general properties necessary to the disposable resin molded products but also have an environment-friendly feature.

In addition, a comparison of Examples 1 and Examples 2 to 4 reveals that the resin layer or the disposable resin molded product has more enhanced tensile strength and modulus and lower elongation with an increase in the content of the cross-linking agent including an isocyanate compound or a polyhydric alcohol compound.

## Claims

1. Use of a resin composition for preparing a disposable resin molded product, comprising a polyalkylene carbonate resin, and a cross-linking agent including an isocyanate compound and an alcohol compound having at least two hydroxyl groups,
wherein the disposable resin molded product has an elongation of at least 150 % and a strength of at least 5 MPa, and is a disposable glove, and
wherein the alcohol compound having at least two hydroxyl groups comprises at least one selected from the group consisting of ethylene glycol, 1,4-butanediol, 1,6-hexanediol, 1,2,6-trihydroxyhexane, 1,3,5-cyclohexanetriol, pentaerythritol, or 1,4-dihydroxydiethyl benzene,
wherein the elongation and the strength are measured at a strain rate of 500mm/min according to ASTM D 412.

2. Use of the resin composition as claimed in claim 1, wherein the polyalkylene carbonate resin comprises a repeating unit of formula 1: 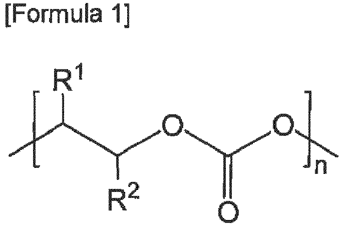 wherein n is an integer from 10 to 1000; and R¹ and R² are independently hydrogen, an alkyl group having 1 to 20 carbon atoms, an aryl group having 6 to 20 carbon atoms, an alkenyl group having 1 to 20 carbon atoms, or a cycloalkyl group having 3 to 20 carbon atoms, wherein R¹ and R² can be bonded to each other to form a cycloalkyl group having 3 to 10 carbon atoms.

3. Use of the resin composition as claimed in claim 1, wherein the polyalkylene carbonate resin has a weight average molecular weight of 10,000 to 1,000,000 measured by GPC (Gel Permeation chromatography) using a polystyrene sample as a standard.

4. Use of the resin composition as claimed in claim 1, wherein the cross-linking agent is contained in an amount of 0.01 to 10 parts by weight with respect to 100 parts by weight of the polyalkylene carbonate resin.

5. Use of the resin composition as claimed in claim 1, wherein the isocyanate compound comprises at least one selected from the group consisting of ethylene diisocyanate, 1,4-tetramethylene diisocyanate, 1,6-hexamethylene diisocyanate, 1,12-dodecane diisocyanate, cyclobutane 1,3-diisocyanate, cyclohexane 1,3-diisocyanate, cyclohexane 1,4-diisocyanate, m-xylene diisocyanate, p-xylene diisocyanate, 2,4-hexahydrotolylene diisocyanate, 2,6-hexahydrotolylene diisocyanate, perhydro-2,5'-diphenyl methane diisocyanate, perhydro-4,4'-diphenyl methane diisocyanate, 1,3-phenylene diisocyanate, 1,4-phenylene diisocyanate, 2,4-tolylene diisocyanate, 2,6-tolylene diisocyanate, or triphenyl methane-4,4',4"-trisisocyanate.

6. Use of the resin composition as claimed in claim 1, wherein the polyalkylene carbonate resin is prepared by a method comprising:
copolymerizing an epoxide-based monomer and carbon dioxide in the presence of a metallic catalyst, the epoxide-based monomer including at least one selected from the group consisting of epoxide, alkylene oxide, aryl oxide, alkenyl oxide, or cycloalkylene oxide.

7. Use of the resin composition as claimed in claim 6, wherein the epoxide-based monomer comprises at least one selected from the group consisting of ethylene oxide, propylene oxide, butylene oxide, or cyclohexylene oxide.

8. Use of the resin composition as claimed in claim 6, wherein the metallic catalyst comprises zinc, cobalt, or chrome.

## Patentansprüche

1. Verwendung einer Harzzusammensetzung zum Herstellen eines Einwegharzformprodukts, umfassend ein Polyalkylencarbonatharz und ein Vernetzungsmittel einschließend eine Isocyanatverbindung und eine Alkoholverbindung mit wenigstens 2 Hydroxylgruppen,
wobei das Einwegharzformprodukt eine Dehnung von wenigstens 150% und eine Festigkeit von wenigstens 5 MPa aufweist und ein Einweghandschuh ist, und
wobei die Alkoholverbindung mit wenigstens zwei Hydroxylgruppen wenigstens eine umfasst, die ausgewählt ist aus der Gruppe bestehend aus Ethylenglycol, 1,4-butandiol, 1,6-Hexandiol, 1,2,6-Trihydroxyhexan, 1,3,5-Cyclohexantriol, Pentaerythritol oder 1,4-Dihydroxydiethylbenzol,
wobei die Dehnung und die Festigkeit bei einer Dehnungsgeschwindigkeit von 500 mm/min gemäß ASTM D 412 gemessen werden.

2. Verwendung der Harzzusammensetzung nach Anspruch 1, wobei das Polyalkylencarbonatharz eine Wiederholungseinheit der Formel 1 umfasst: 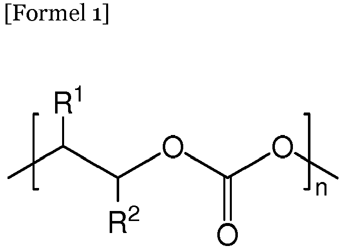 wobei n eine ganze Zahl von 10 bis 1000 ist; und R¹ und R² unabhängig Wasserstoff, eine Alkylgruppe mit 1 bis 20 Kohlenstoffatomen, eine Arylgruppe mit 6 bis 20 Kohlenstoffatomen, eine Alkenylgruppe mit 1 bis 20 Kohlenstoffatomen oder eine Cycloalkylgruppe mit 3 bis 20 Kohlenstoffatomen sind, wobei R¹ und R² miteinander verbunden sein können, um eine Cycloalkylgruppe mit 3 bis 10 Kohlenstoffatomen zu bilden.

3. Verwendung der Harzzusammensetzung nach Anspruch 1, wobei das Polyalkylencarbonatharz ein Gewichtsmittelmolekulargewicht von 10.000 bis 1.000.000, gemessen per GPC (Gelpermeationschromatographie) unter Verwendung einer Polystyrolprobe als ein Standard, aufweist.

4. Verwendung der Harzzusammensetzung nach Anspruch 1, wobei das Vernetzungsmittel in einer Menge von 0,01 bis 10 Gewichtsteilen in Bezug auf 100 Gewichtsteile des Polyalkylencarbonatharzes enthalten ist.

5. Verwendung der Harzzusammensetzung nach Anspruch 1, wobei die Isocyanatverbindung wenigstens eine umfasst, die ausgewählt ist aus der Gruppe bestehend aus Ethylendiisocyanat, 1,4-Tetramethylendiisocyanat, 1,6-Hexamethylendüsocyanat, 1,12-Dodecandiisocyanat, Cyclobutan-1,3-diisocyanat, Cyclohexan-1,3-diisocyanat, Cyclohexan-1,4-diisocyanat, m-Xyloldüsocyanat, p-Xyloldüsocyanat, 2,4-Hexahydrotolylendiisocyanat, 2,6-Hexahydrotolylendiisocyanat, Perhydro-2,5'-diphenylmethandiisocyanat, Perhydro-4,4'-diphenylmethandiisocyanat, 1,3-Phenylendiisocyanat, 1,4-Phenylendiisocyanat, 2,4-Tolylendiisocyanat, 2,6-Tolylendiisocyanat oder Triphenylmethan-4,4',4"-Trisisocyanat.

6. Verwendung der Harzzusammensetzung nach Anspruch 1, wobei das Polyalkylencarbonatharz durch ein Verfahren hergestellt wird, das umfasst:
Copolymerisieren eines Monomers auf Epoxidbasis und Kohlendioxid in der Gegenwart eines metallischen Katalysators, wobei das Monomer auf Epoxidbasis wenigstens eines einschließt, das ausgewählt wird aus der Gruppe bestehend aus Epoxid, Alkylenoxid, Aryloxid, Alkenyloxid oder Cycloalkylenoxid.

7. Verwendung der Harzzusammensetzung nach Anspruch 6, wobei das Monomer auf Epoxidbasis wenigstens eines umfasst, das ausgewählt wird aus der Gruppe bestehend aus Ethylenoxid, Propylenoxid, Butylenoxid oder Cyclohexylenoxid.

8. Verwendung der Harzzusammensetzung nach Anspruch 6, wobei der metallische Katalysator Zink, Kobalt oder Chrom umfasst.

## Revendications

1. Utilisation d'une composition résinique dans la préparation d'un produit résinique moulé jetable comprenant une résine de poly(carbonate d'alkylène) et un agent de réticulation incluant un composé isocyanate et un composé alcool ayant au moins deux groupements hydroxyles,
où le produit résinique moulé jetable a un allongement d'au moins 150 % et une résistance d'au moins 5 MPa et est un gant jetable et
où le composé alcool ayant au moins deux groupements hydroxyles comprend au moins un sélectionné dans le groupe consistant en l'éthylène glycol, le 1,4-butanediol, le 1,6-hexanediol, le 1,2,6-trihydroxyhexane, le 1,3,5-cyclohexanetriol, le pentaérythritol ou le 1,4-dihydroxydiéthylbenzène,
où l'allongement et la résistance sont mesurés conformément à la norme ASTM D 412 à une vitesse de déformation de 500 mm/min.

2. Utilisation de la composition résinique selon la revendication 1, où la résine de poly(carbonate d'alkylène) comprend un motif répétitif de formule 1 : 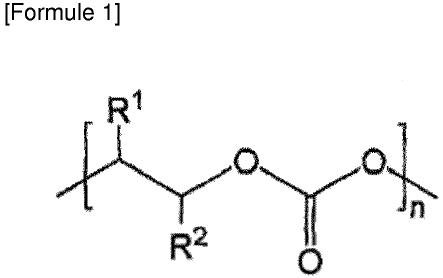 où n est un nombre entier qui va de 10 à 1 000 ; et R¹ et R² représentent indépendamment un hydrogène, un groupement alkyle ayant de 1 à 20 atomes de carbone, un groupement aryle ayant de 6 à 20 atomes de carbone, un groupement alcényle ayant de 1 à 20 atomes de carbone ou un groupement cycloalkyle ayant de 3 à 20 atomes de carbone, où R¹ et R² peuvent être liés l'un à l'autre pour former un groupement cycloalkyle ayant de 3 à 10 atomes de carbone.

3. Utilisation de la composition résinique selon la revendication 1, où la résine de poly(carbonate d'alkylène) a une masse moléculaire moyenne en poids qui va de 10 000 à 1 000 000 à la mesure par GPC (chromatographie par perméation de gel) en employant un échantillon de polystyrène comme étalon.

4. Utilisation de la composition résinique selon la revendication 1, où l'agent de réticulation est contenu à une quantité qui va de 0,01 à 10 parties en poids pour 100 parties en poids de résine de poly(carbonate d'alkylène).

5. Utilisation de la composition résinique selon la revendication 1, où le composé isocyanate comprend au moins un sélectionné dans le groupe consistant en les suivants :
diisocyanate d'éthylène, diisocyanate de 1,4-tétraméthylène, diisocyanate de 1,6-hexaméthylène, diisocyanate de 1,12-dodécane, 1,3-diisocyanate de cyclobutane, 1,3-diisocyanate de cyclohexane, 1,4-diisocyanate de cyclohexane, diisocyanate de m-xylène, diisocyanate de p-xylène, diisocyanate de 2,4-hexahydrotolylène, diisocyanate de 2,6-hexahydrotolylène, diisocyanate de perhydro-2,5'-diphénylméthane, diisocyanate de perhydro-4,4'-diphénylméthane, diisocyanate de 1,3-phénylène, diisocyanate de 1,4-phénylène, diisocyanate de 2,4-tolylène, diisocyanate de 2,6-tolylène ou 4,4',4"-(tris)isocyanate de triphénylméthane.

6. Utilisation de la composition résinique selon la revendication 1, où la résine de poly(carbonate d'alkylène) est préparée par un procédé comprenant : la copolymérisation d'un monomère à base d'époxyde et de dioxyde de carbone en la présence d'un catalyseur métallique, le monomère à base d'époxyde incluant au moins un sélectionné dans le groupe consistant en un époxyde, un oxyde d'alkylène, un oxyde d'aryle, un oxyde d'alcényle ou un oxyde de cycloalkylène.

7. Utilisation de la composition résinique selon la revendication 6, où le monomère à base d'époxyde comprend au moins un sélectionné dans le groupe consistant en l'oxyde d'éthylène, l'oxyde de propylène, l'oxyde de butylène ou l'oxyde de cyclohexylène.

8. Utilisation de la composition résinique selon la revendication 6, où le catalyseur métallique comprend le zinc, le cobalt ou le chrome.
